# EUROPEAN PATENT APPLICATION

(11) **EP 4 195 518 A1**
(43) Date of publication of application: **14.06.2023**
(21) Application number: 21860009.6
(22) Date of filing: 26.07.2021
(51) Int. Cl.: H04B 1/40

(54) **RADIO-FREQUENCY CIRCUIT FOR TRANSMITTING MULTI-FREQUENCY BAND SIGNALS**

(30) Priority: 27.08.2020 CN 202010875407
(71) Applicant: Huawei Technologies Co., Ltd., Shenzhen, Guangdong 518129 (CN)
(72) Inventor: ZHAN, Zhixin, Shenzhen, Guangdong 518129 (CN); WANG, Xiaoyi, Shenzhen, Guangdong 518129 (CN); CHIU, Shihcheng, Shenzhen, Guangdong 518129 (CN); PAN, Guangsheng, Shenzhen, Guangdong 518129 (CN)
(74) Representative: Gill Jennings & Every LLP
(86) International application number: PCT/CN2021/108472
(87) International publication number: WO 2022/042169

(57) **Abstract**

This application provides a radio frequency circuit for transmitting a multi-band signal. The radio frequency circuit includes a first radio frequency circuit. The first radio frequency circuit includes a first interface, a first switch, a first filter, a second filter, a second switch, and a second interface. The first interface is connected to a first end of the first switch, a second end of the first switch is connected to one end of the first filter, a third end of the first switch is connected to one end of the second filter, the other end of the second filter is connected to one end of the second switch, and the other end of the second switch is connected to the second interface. The first filter and the second filter are configured to filter signals of different frequency bands. The first switch is a multi-channel switch, and is configured to combine filtered signals of the different frequency bands and send a combined signal to the first interface. In a multi-band signal transmission scenario, in the radio frequency circuit in this application, a signal of one frequency band does not interrupt a signal of another frequency band. This helps improve a throughput of a terminal device.

## Description

This application claims priority to Chinese Patent Application No. 202010875407.4, filed with the China National Intellectual Property Administration on August 27, 2020 and entitled "RADIO FREQUENCY CIRCUIT FOR TRANSMITTING MULTI-BAND SIGNAL", which is incorporated herein by reference in its entirety.

### TECHNICAL FIELD

This application relates to the communication field, and more specifically, to a radio frequency circuit for transmitting a multi-band signal.

### BACKGROUND

Multi-band transmission means that a network device and a terminal device may simultaneously transmit signals of a plurality of frequency bands through different transmission paths. For example, in a carrier aggregation (carrier aggregation, CA) scenario, the terminal device and the network device may simultaneously transmit signals of a plurality of different frequency bands by using a CA technology, so that spectrum resources of the plurality of frequency bands are aggregated and used by the terminal device. This improves a transmission rate of the terminal device, and increases a throughput of the terminal device. In a new radio (new radio, NR) system, the terminal device is provided with a plurality of antennas. When the terminal device sends a reference signal (for example, a sounding reference signal (sounding reference signal, SRS)), the terminal device may alternately send the signal through the plurality of antennas, to obtain a more accurate channel estimation value.

In an existing radio frequency circuit structure, signals alternately sent by the terminal device at frequency bands may interrupt signal transmission of another frequency band, which affects implementation of CA, and causes the throughput of the terminal device to decrease.

### SUMMARY

This application provides a radio frequency circuit for transmitting a multi-band signal. In a multi-band signal transmission scenario, a signal of one frequency band does not interrupt a signal of another frequency band. This helps improve a throughput of a terminal device.

According to a first aspect, a radio frequency circuit for transmitting a multi-band signal is provided. The radio frequency circuit includes a first radio frequency circuit. The first radio frequency circuit includes a first interface, a first switch, a first filter, a second filter, a second switch, and a second interface.

The first interface is connected to a first end of the first switch, a second end of the first switch is connected to one end of the first filter, a third end of the first switch is connected to one end of the second filter, the other end of the second filter is connected to one end of the second switch, and the other end of the second switch is connected to the second interface. The first filter is configured to filter a signal of a first frequency band, the second filter is configured to filter a signal of a second frequency band, and the first switch is a multi-channel switch, and is configured to combine a filtered signal of the first frequency band with a filtered signal of the second frequency band, and send a combined signal to the first interface.

The first interface is configured to connect to a second radio frequency circuit, the second interface is configured to connect to a first end of an external component, and a second end of the external component is connected to the second radio frequency circuit. The second radio frequency circuit is configured to send, by using the external component, the signal of the second frequency band to the first radio frequency circuit to perform filtering, and the first radio frequency circuit is configured to send, to a target antenna by using the second radio frequency circuit, the signal that is of the second frequency band and that is processed by the second radio frequency circuit.

Optionally, the radio frequency circuit may be deployed in a terminal device. The terminal device may send the signal of the second frequency band by using the second radio frequency circuit, and then sequentially transmit the signal of the second frequency band to the second switch, the second filter, and the first switch by using the external component. The first switch can be turned on in a plurality of paths, combine the signal of the second frequency band with the signal of the first frequency band, send the combined signal to the first interface, and finally send the signal to the target antenna by using the second radio frequency circuit. The target antenna is an antenna connected to the second radio frequency circuit.

Therefore, in the foregoing radio frequency circuit, the signal of the second frequency band does not interrupt a path of the signal of the first frequency band. In a multi-band signal transmission scenario, in the radio frequency circuit in this embodiment of this application, a signal of one frequency band does not interrupt a signal of another frequency band. This helps improve a throughput of the terminal device, to improve system performance.

With reference to the first aspect, in some implementations of the first aspect, the radio frequency circuit may include the second radio frequency circuit.

With reference to the first aspect, in some implementations of the first aspect, the second radio frequency circuit includes a third interface, a fourth interface, a third switch, a fifth interface, a first multiplexer, a sixth interface, a fourth switch, a fifth switch, a first power amplifier, a second power amplifier, a seventh interface, an eighth interface, and a ninth interface.

A first end of the third switch is connected to the third interface, a second end of the third switch is connected to the fourth interface, a third end of the third switch is connected to the fifth interface, a fourth end of the third switch is connected to a first end of the first multiplexer, a second end of the first multiplexer is connected to a first end of the fourth switch, a third end of the first multiplexer is connected to one end of the fifth switch, a second end of the fourth switch is connected to a transmit end of the first power amplifier, a third end of the fourth switch is connected to the sixth interface, a fourth end of the fourth switch is connected to the seventh interface, the other end of the fifth switch is connected to a transmit end of the second power amplifier, a receive end of the first power amplifier is connected to the eighth interface, and a receive end of the second power amplifier is connected to the ninth interface.

The third interface is configured to connect to a first antenna, the fourth interface is configured to connect to a second antenna, the fifth interface is configured to connect to the first interface, the sixth interface is configured to connect to the second end of the external component, the seventh interface is configured to connect to a third end of the external component, and the second end of the external component is connected to a third radio frequency circuit.

The seventh interface is configured to send, to the first multiplexer by using the fourth switch, the signal that is of the second frequency band and that is processed by the third radio frequency circuit, the second power amplifier is configured to send a signal of a third frequency band to the first multiplexer by using the fifth switch, the first multiplexer includes two filters, the two filters are respectively configured to filter the signal of the second frequency band and the signal of the third frequency band, the first multiplexer is configured to combine the filtered signal of the second frequency band with the filtered signal of the third frequency band, and send a combined signal to the third switch, the third switch is configured to send the combined signal to the target antenna, and the target antenna is the first antenna or the second antenna.

In this implementation, the signal that is of the second frequency band and that is sent by the third radio frequency circuit may be transmitted to the target antenna by multiplexing a path of sending the signal of the third frequency band in the second radio frequency circuit. According to the radio frequency circuit provided in this embodiment of this application, the signal may be alternately sent through a plurality of antennas without increasing costs.

With reference to the first aspect, in some implementations of the first aspect, the radio frequency circuit may further include the third radio frequency circuit. The third radio frequency circuit includes a tenth interface, an eleventh interface, a sixth switch, a twelfth interface, a second multiplexer, a thirteenth interface, a seventh switch, an eighth switch, a third power amplifier, a fourth power amplifier, a fourteenth interface, a fifteenth interface, and a sixteenth interface.

A first end of the sixth switch is connected to the tenth interface, a second end of the sixth switch is connected to the eleventh interface, a third end of the sixth switch is connected to the twelfth interface, a fourth end of the sixth switch is connected to a first end of the second multiplexer, a second end of the second multiplexer is connected to a first end of the seventh switch, a third end of the second multiplexer is connected to one end of the eighth switch, a second end of the seventh switch is connected to a transmit end of the third power amplifier, a third end of the seventh switch is connected to the thirteenth interface, a fourth end of the seventh switch is connected to the fourteenth interface, the other end of the eighth switch is connected to a transmit end of the fourth power amplifier, a receive end of the third power amplifier is connected to the fifteenth interface, and a receive end of the fourth power amplifier is connected to the sixteenth interface.

The tenth interface is configured to connect to a third antenna, the eleventh interface is configured to connect to a fourth antenna, the twelfth interface is configured to connect to a fourth radio frequency circuit, the thirteenth interface is configured to connect to the second end of the external component, the fourteenth interface is configured to connect to a fourth end of the external component, and a fifth end of the external component is connected to the fourth radio frequency circuit.

The fourteenth interface is configured to send, to the second multiplexer by using the seventh switch, the signal that is of the second frequency band and that is processed by the second radio frequency circuit, the fourth power amplifier is configured to send the signal of the third frequency band to the second multiplexer by using the eighth switch, the second multiplexer includes two filters, the two filters are respectively configured to filter the signal of the second frequency band and the signal of the third frequency band, the second multiplexer is configured to combine the filtered signal of the second frequency band with the filtered signal of the third frequency band, and send the combined signal to the sixth switch, the sixth switch is configured to send the combined signal to the target antenna, and the target antenna is the third antenna or the fourth antenna.

In this implementation, the terminal device may send the signal of the second frequency band by using the second radio frequency circuit, and then sequentially transmit the signal of the second frequency band to the seventh switch and the second multiplexer by using the external component and the fourteenth interface. In addition, the terminal device may send the signal of the third frequency band by using the fourth power amplifier, and transmit the amplified signal to the second multiplexer by using the eighth switch. The second multiplexer combines the signal of the second frequency band with the signal of the third frequency band and transmits the combined signal to the target antenna by using the sixth switch. The target antenna is the third antenna or the fourth antenna.

In this embodiment of this application, the signal that is of the second frequency band and that is sent by the second radio frequency circuit may be transmitted to the target antenna by multiplexing a path of sending the signal of the third frequency band in the third radio frequency circuit. According to the radio frequency circuit provided in this embodiment of this application, the signal may be alternately sent through a plurality of antennas without increasing costs.

With reference to the first aspect, in some implementations of the first aspect, the radio frequency circuit may further include the fourth radio frequency circuit. The fourth radio frequency circuit includes a seventeenth interface, a ninth switch, a third filter, a fourth filter, a tenth switch, and an eighteenth interface.

A first end of the ninth switch is connected to the seventeenth interface, a second end of the ninth switch is connected to one end of the third filter, a third end of the ninth switch is connected to one end of the fourth filter, the other end of the fourth filter is connected to one end of the tenth switch, and the other end of the tenth switch is connected to the eighteenth interface.

The third filter is configured to filter the signal of the first frequency band, the fourth filter is configured to filter the signal of the second frequency band, and the ninth switch is a multi-channel switch, and is configured to combine the filtered signal of the first frequency band with the filtered signal of the second frequency band, and send the combined signal to the seventeenth interface. The seventeenth interface is configured to connect to the twelfth interface, and the eighteenth interface is configured to connect to the fifth end of the external component. The second radio frequency circuit or the third radio frequency circuit is configured to send the signal of the second frequency band to the fourth radio frequency circuit by using the external component to perform filtering, and the fourth radio frequency circuit is configured to send, to the target antenna, the signal that is of the second frequency band and that is processed by the second radio frequency circuit or the third radio frequency circuit.

In this implementation, the terminal device may send the signal of the second frequency band by using the second radio frequency circuit, and then sequentially transmit the signal of the second frequency band to the tenth switch, the fourth filter, and the ninth switch by using the external component. The ninth switch can be turned on in a plurality of paths, combine the signal of the second frequency band with the signal of the first frequency band, send the combined signal to the seventeenth interface, and finally send the signal to the target antenna by using the third radio frequency circuit. The target antenna is an antenna connected to the third radio frequency circuit.

In this embodiment, the signal of the second frequency band does not interrupt the path of the signal of the first frequency band. In addition, when sending the signal of the second frequency band, the second radio frequency circuit may multiplex a path of sending the signal of the third frequency band in the third radio frequency circuit. In a multi-band signal transmission scenario, in the radio frequency circuit in this embodiment of this application, a signal of one frequency band does not interrupt a signal of another frequency band, and the signal may be alternately sent through a plurality of antennas. This improves a throughput of the terminal device and improves system performance.

With reference to the first aspect, in some implementations of the first aspect, the radio frequency circuit may further include the external component.

According to a second aspect, another radio frequency circuit for transmitting a multi-band signal is provided. The radio frequency circuit includes a second radio frequency circuit. The second radio frequency circuit includes a third interface, a fourth interface, a third switch, a fifth interface, a first multiplexer, a sixth interface, a fourth switch, a fifth switch, a first power amplifier, a second power amplifier, a seventh interface, an eighth interface, and a ninth interface.

A first end of the third switch is connected to the third interface, a second end of the third switch is connected to the fourth interface, a third end of the third switch is connected to the fifth interface, a fourth end of the third switch is connected to a first end of the first multiplexer, a second end of the first multiplexer is connected to a first end of the fourth switch, a third end of the first multiplexer is connected to one end of the fifth switch, a second end of the fourth switch is connected to a transmit end of the first power amplifier, a third end of the fourth switch is connected to the sixth interface, a fourth end of the fourth switch is connected to the seventh interface, the other end of the fifth switch is connected to a transmit end of the second power amplifier, a receive end of the first power amplifier is connected to the eighth interface, and a receive end of the second power amplifier is connected to the ninth interface.

The third interface is configured to connect to a first antenna, the fourth interface is configured to connect to a second antenna, the fifth interface is configured to connect to the first interface, the sixth interface is configured to connect to the second end of the external component, the seventh interface is configured to connect to a third end of the external component, and the second end of the external component is connected to a third radio frequency circuit.

The seventh interface is configured to send, to the first multiplexer by using the fourth switch, the signal that is of the second frequency band and that is processed by the third radio frequency circuit, the second power amplifier is configured to send a signal of a third frequency band to the first multiplexer by using the fifth switch, the first multiplexer includes two filters, the two filters are respectively configured to filter the signal of the second frequency band and the signal of the third frequency band, the first multiplexer is configured to combine the filtered signal of the second frequency band with the filtered signal of the third frequency band, and send a combined signal to the third switch, the third switch is configured to send the combined signal to the target antenna, and the target antenna is the first antenna or the second antenna.

In the foregoing radio frequency circuit, the terminal device may send the signal of the second frequency band by using the third radio frequency circuit, and then sequentially transmit the signal of the second frequency band to the fourth switch and the first multiplexer by using the external component and the seventh interface. In addition, the terminal device may send the signal of the third frequency band by using the second power amplifier, and transmit the amplified signal to the first multiplexer by using the fifth switch. The first multiplexer combines the signal of the second frequency band with the signal of the third frequency band and transmits the combined signal to the target antenna by using the third switch. The target antenna is the first antenna or the second antenna.

Therefore, in the foregoing radio frequency circuit, the signal that is of the second frequency band and that is sent by the third radio frequency circuit may be transmitted to the target antenna by multiplexing a path of sending the signal of the third frequency band in the second radio frequency circuit. According to the radio frequency circuit provided in this embodiment of this application, the signal may be alternately sent through a plurality of antennas without increasing costs.

With reference to the second aspect, in some implementations of the second aspect, the radio frequency circuit may include a first radio frequency circuit, the third radio frequency circuit, a fourth radio frequency circuit, and the external component.

According to a third aspect, a terminal device is provided, including the radio frequency circuit according to any one of the possible implementations of the first aspect.

According to a fourth aspect, another terminal device is provided, including the radio frequency circuit according to any one of the possible implementations of the second aspect.

### BRIEF DESCRIPTION OF DRAWINGS

FIG. 1 is a schematic block diagram of a structure of a radio frequency circuit in the conventional technology;
FIG. 2 is a schematic block diagram of a structure of a radio frequency circuit according to an embodiment of this application;
FIG. 3 is a schematic block diagram of another structure of a radio frequency circuit according to an embodiment of this application;
FIG. 4 is a schematic block diagram of still another structure of a radio frequency circuit according to an embodiment of this application;
FIG. 5 is a schematic block diagram of yet another structure of a radio frequency circuit according to an embodiment of this application;
FIG. 6 is a schematic block diagram of another third transceiver module according to an embodiment of this application;
FIG. 7 is a schematic block diagram of still yet another structure of a radio frequency circuit according to an embodiment of this application;
FIG. 8 is a schematic block diagram of another first transceiver module according to an embodiment of this application;
FIG. 9 is a schematic block diagram of a further structure of a radio frequency circuit according to an embodiment of this application; and
FIG. 10 is a schematic diagram of an internal structure of a multiplexer according to an embodiment of this application.

### DESCRIPTION OF EMBODIMENTS

The following describes the technical solutions of this application with reference to the accompanying drawings.

For ease of understanding, the following first describes related terms in embodiments of this application.

### 1. Sounding reference signal (sounding reference signal, SRS) and alternate sending of the SRS

The SRS is an uplink reference signal sent by a terminal device to a network device, and is used by the network device to estimate frequency domain information of an uplink channel, and perform selective frequency scheduling and downlink beamforming, to improve a downlink throughput.

Alternate sending of the SRS indicates an antenna through which the terminal device sends the SRS. In an alternate sending mode of the SRS, more antennas that can send the SRS indicate more accurate channel estimation. If the SRS is sent only through a fixed antenna, information about another antenna is lost. Consequently, antennas of the terminal device are not fully used, making it difficult to obtain a highest channel estimation value.

Because the terminal device is usually equipped with a plurality of transceiver antennas, the following transmission modes may be configured.

1 transmit 1 receive (1 transmit 1 receive, 1T1R): The terminal device sends the SRS to the network device through only one fixed antenna, that is, the terminal device cannot alternately send the SRS.

1 transmit 4 receive (1T4R): The terminal device alternately sends the SRS through four antennas, and selects one antenna at a time for sending.

2 transmit 4 receive (2T4R): The terminal device alternately sends the SRS through two antennas, and selects two antennas at a time for sending.

### 2. New radio (NR) carrier aggregation (carrier aggregation, CA)

Carrier aggregation means aggregating a plurality of carriers for sending. Because frequency bands that can be allocated to each operator are limited and not necessarily continuous, if each terminal device can use only one frequency band, a transmission rate of the terminal device is limited. A CA technology resolves such a problem. In other words, spectrum resources of a same frequency band or different frequency bands are aggregated and used by the terminal device, to improve the transmission rate of the terminal device. In brief, the CA technology is to aggregate a plurality of component carriers (component carrier, CC) together to support a larger transmission bandwidth.

In this application, NR CA is a CA scenario in an NR system.

### 3. EN dual connectivity (dual connectivity, DC)

E represents an evolved-UMTS terrestrial radio access (evolved-UMTS terrestrial radio access, E-UTRA), namely, a 4G radio access network. UMTS is a short form of a universal mobile telecommunications system (universal mobile telecommunications system). N represents NR, namely, 5G new radio.

EN DC is dual connectivity of a 4G radio access network and a 5G NR. In an EN DC scenario, the system includes a 4G network device and a 5G network device. A terminal device may communicate with the 4G network device by using a 4G radio access technology, or communicate with the 5G network device by using a 5G radio access technology.

### 4. Multi-band transmission

Multi-band transmission means that a network device and a terminal device may simultaneously transmit a plurality of frequency bands through different transmission paths. For example, in the NR CA scenario, signals of a plurality of different frequency bands may be simultaneously transmitted between the terminal device and the network device by using the CA technology. For another example, in the EN DC scenario, signals that are of a plurality of different frequency bands and that include a 4G signal and a 5G signal may be simultaneously transmitted between the terminal device and the network device.

For ease of understanding, dual-frequency band transmission is used as an example for description in this application. In a possible implementation, frequency band combinations for dual-frequency band transmission may be B3 + N41, B39 + N41, B1 + N41, B3 + N40, B3 + N38, B1 + N38, B1 + N40, and the like. However, this is not limited in embodiments of this application. B3, B39, and B1 are examples of a plurality of different frequency bands corresponding to the 4G signal. N41, N40, and N38 are examples of a plurality of different frequency bands corresponding to the 5G signal. The following uses B3 + N41 dual-frequency band signal transmission as an example for description.

To alternately send the SRS during multi-band transmission, currently, one solution is as follows: Five transceiver antennas are configured for the terminal device, and the terminal device may alternately send the SRS through four antennas, to measure quality of an uplink channel of the NR system. It should be understood that the SRS is a signal of a 5G frequency band. In addition, the terminal device may transmit a signal of another frequency band (for example, a signal of a 4G frequency band) through one antenna. The following describes the solution in detail.

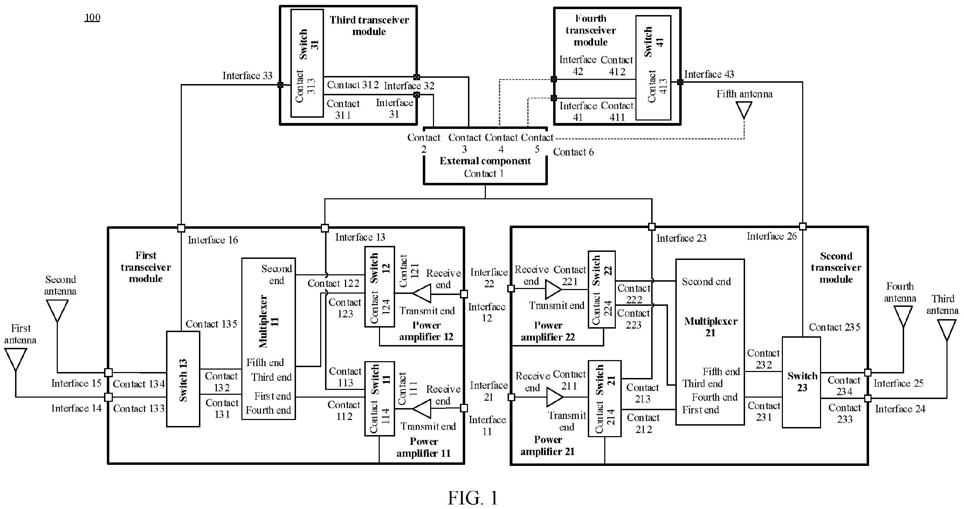

FIG. 1 is a schematic block diagram of a structure of a radio frequency circuit 100 of a terminal device in the conventional technology. The radio frequency circuit 100 includes a first transceiver module, a second transceiver module, a third transceiver module, a fourth transceiver module, an external component, a first antenna, a second antenna, a third antenna, a fourth antenna, and a fifth antenna. The first transceiver module is connected to the first antenna, the second antenna, the third transceiver module, and the external component. The second transceiver module is connected to the external component, the fourth transceiver module, the third antenna, and the fourth antenna. The external component is connected to the first transceiver module, the second transceiver module, the third transceiver module, the fourth transceiver module, and the fifth antenna.

Specifically, the first transceiver module includes a power amplifier 11, a power amplifier 12, a switch 11, a switch 12, a switch 13, and a multiplexer 11. A transmit end of the power amplifier 11 is connected to a contact 111 of the switch 11, and a receive end of the power amplifier 11 is connected to an interface 11. A transmit end of the power amplifier 12 is connected to a contact 121 of the switch 12, and a receive end of the power amplifier 12 is connected to an interface 12. A contact 112 of the switch 11 is connected to a first end of the multiplexer 11, and a contact 113 of the switch 11 is connected to a contact 1 of the external component through an interface 13. A contact 122 of the switch 12 is connected to a second end of the multiplexer 11. A contact 123 of the switch 12 is connected to a third end of the multiplexer 11. A fourth end of the multiplexer 11 is connected to a contact 131 of the switch 13. A fifth end of the multiplexer 11 is connected to a contact 132 of the switch 13. A contact 133 of the switch 13 is connected to the first antenna through an interface 14. A contact 134 of the switch 13 is connected to the second antenna through an interface 15.

In the first transceiver module, the power amplifier 11 and the power amplifier 12 are configured to amplify a radio frequency signal. The switch 11 and the switch 12 may be switches that switch a plurality of paths based on a control signal. A contact 114 of the switch 11 and a contact 124 of the switch 12 are separately configured to receive different signals. The switch 13 is a TAS (terminating AT&T switch) switch, and can be controlled by a modem to switch channels to turn on different transmission paths. The multiplexer 11 is a group of superimposed filters, and these filters are not loaded to each other in a combined manner, so that output communication signals can be highly isolated.

The second transceiver module includes a power amplifier 21, a power amplifier 22, a switch 21, a switch 22, a switch 23, and a multiplexer 21. A transmit end of the power amplifier 21 is connected to a contact 211 of the switch 21, and a receive end of the power amplifier 21 is connected to an interface 21. A transmit end of the power amplifier 22 is connected to a contact 221 of the switch 22, and a receive end of the power amplifier 22 is connected to an interface 22. A contact 212 of the switch 21 is connected to a first end of the multiplexer 21, and a contact 213 of the switch 21 is connected to the contact 1 of the external component through an interface 23. A contact 222 of the switch 22 is connected to a second end of the multiplexer 21. A contact 223 of the switch 22 is connected to a third end of the multiplexer 21. A fourth end of the multiplexer 21 is connected to a contact 231 of the switch 23. A fifth end of the multiplexer 21 is connected to a contact 232 of the switch 23. A contact 233 of the switch 23 is connected to the third antenna through an interface 24. A contact 234 of the switch 23 is connected to the fourth antenna through an interface 25.

In the second transceiver module, the power amplifier 21 and the power amplifier 22 are configured to amplify a radio frequency signal. The switch 21 and the switch 22 may be switches that switch a plurality of paths based on a control signal. A contact 214 of the switch 21 and a contact 224 of the switch 22 are separately configured to receive different signals. The switch 23 is a TAS switch, and can be controlled by a modem to switch channels to turn on different transmission paths. The multiplexer 21 is a group of superimposed filters, and these filters are not loaded to each other in a combined manner, so that output communication signals can be highly isolated.

The third transceiver module includes a switch 31 and a filter. A contact 311 of the switch 31 is connected to a contact 2 of the external component through an interface 31. A contact 312 of the switch 31 is connected to a contact 3 of the external component through an interface 32. A contact 313 of the switch 31 is connected to the first transceiver module through an interface 33 and an interface 16. The filter is not shown in FIG. 1.

In the third transceiver module, the switch 31 may be switched based on a control signal, to turn on a path.

The fourth transceiver module includes a switch 41 and a filter. A contact 411 of the switch 41 is connected to a contact 5 of the external component through an interface 41. A contact 412 of the switch 41 is connected to a contact 4 of the external component through an interface 42. A contact 413 of the switch 41 is connected to the second transceiver module through an interface 43 and an interface 26. The filter is not shown in FIG. 1.

In the fourth transceiver module, the switch 41 may be switched based on a control signal, to turn on a path.

In addition to the contact 1, the contact 2, the contact 3, the contact 4, and the contact 5, the external component includes a contact 6. The external component is connected to the fifth antenna by using the contact 6.

The external component is configured to turn on different paths such as a switch.

1T4R is used as an example. In FIG. 1, the terminal device may simultaneously receive signals of B3 and N41 through four antennas. The following describes paths for receiving the signals.

There are four paths for receiving the signal of B3.
Path 1: first antenna -> switch 13 -> switch 31

The terminal device may receive a signal of B3 through the first antenna, transmit the signal of B3 to the switch 13 through the interface 14, and then transmit the signal of B3 to the switch 31 through the interface 16 and the interface 33.
Path 2: second antenna -> switch 13 -> multiplexer 11

The terminal device may receive the signal of B3 through the second antenna, transmit the signal of B3 to the switch 13 through the interface 15, and then transmit the signal of B3 to the multiplexer 11.
Path 3: third antenna -> switch 23 -> switch 41

The terminal device may receive the signal of B3 through the third antenna, transmit the signal of B3 to the switch 23 through the interface 24, and then transmit the signal of B3 to the switch 41 through the interface 26 and the interface 43.
Path 4: fourth antenna -> switch 23 -> multiplexer 21

The terminal device may receive the signal of B3 through the fourth antenna, transmit the signal of B3 to the switch 23 through the interface 25, and then transmit the signal of B3 to the multiplexer 21.

The paths for receiving a signal of N41 are the same as those for receiving the signal of B3. Details are not described again.

The foregoing paths represent only paths of components through which the signal passes in FIG. 1, and components (for example, a filter) through which another signal needs to pass is not shown herein.

In FIG. 1, the terminal device can send the signals of B3 and N41 through only one antenna at a time. The following describes paths of sending the signals.

If the power amplifier 12 in the first transceiver module is used as a transmit end, there are two paths for sending the signal of B3.
Path 1: power amplifier 12 -> switch 12 -> multiplexer 11 -> switch 13 -> first antenna

The terminal device may amplify the signal of B3 by using the power amplifier 12, then sequentially transmit the signal of B3 to the switch 12, the multiplexer 11, and the switch 13, and finally transmit the signal of B3 to the first antenna through the interface 14.
Path 2: power amplifier 12 -> switch 12 -> multiplexer 11 -> switch 13 -> second antenna

The terminal device may amplify the signal of B3 by using the power amplifier 12, then sequentially transmit the signal of B3 to the switch 12, the multiplexer 11, and the switch 13, and finally transmit the signal of B3 to the second antenna through the interface 15.

If the power amplifier 22 in the second transceiver module is used as a transmit end, there are two paths for sending the signal of B3.
Path 1: power amplifier 22 -> switch 22 -> multiplexer 21 -> switch 23 -> third antenna

The terminal device may amplify the signal of B3 by using the power amplifier 22, then sequentially transmit the signal of B3 to the switch 22, the multiplexer 21, and the switch 23, and finally transmit the signal of B3 to the third antenna through the interface 24.
Path 2: power amplifier 22 -> switch 22 -> multiplexer 21 -> switch 23 -> fourth antenna

The terminal device may amplify the signal of B3 by using the power amplifier 22, then sequentially transmit the signal of B3 to the switch 22, the multiplexer 21, and the switch 23, and finally transmit the signal of B3 to the fourth antenna through the interface 25.

There are four paths for sending the signal of N41.
Path 1: power amplifier 11 -> switch 11 -> multiplexer 11 -> switch 13 -> first antenna

The terminal device may amplify the signal of N41 by using the power amplifier 11, then sequentially transmit the signal of N41 to the switch 11, the multiplexer 11, and the switch 13, and finally transmit the signal of N41 to the first antenna through the interface 14.
Path 2: power amplifier 11 -> switch 11 -> external component -> switch 31 -> switch 13 -> second antenna

The terminal device may amplify the signal of N41 by using the power amplifier 11, sequentially transmit the signal of N41 to the switch 11, transmit the signal of N41 to the external component by through the interface 13, transmit the signal of N41 to the switch 31 through the interface 31, transmit the signal of N41 to the switch 13 through the interface 33 and the interface 16, and finally transmit the signal of N41 is to the second antenna through the interface 15.
Path 3: power amplifier 11 -> switch 11 -> external component -> switch 41 -> switch 23 -> third antenna or fourth antenna

The terminal device may amplify the signal of N41 by using the power amplifier 11, transmit the signal of N41 to the switch 11, transmit the signal of N41 to the external component, transmit the signal of N41 to the switch 41 through the interface 41, transmit the signal of N41 to the switch 23 through the interface 43 and the interface 26, and finally transmit the signal of N41 to the third antenna or the fourth antenna through the interface 24 or the interface 25.
Path 4: power amplifier 11 -> switch 11 -> external component -> fifth antenna

The terminal device may amplify the signal of N41 by using the power amplifier 11, transmit the signal of N41 to the switch 11, transmit the signal of N41 to the external component through the interface 13, and finally transmit the signal of N41 to the fifth antenna.

It should be understood that the terminal device may send the signal of B3 by using the power amplifier 22, the switch 22, the multiplexer 21, the switch 23, and the third antenna/the fourth antenna, and the switch 23 is controlled by a modem in a 4G system. In a possible implementation, in the path 3, if the terminal device transmits the signal of B3 to the switch 23, under control of the modem in the 4G system, the switch 23 turns on a path between the multiplexer 21 and the third antenna. In this case, the terminal device may transmit the signal of B3 to the third antenna through the interface 24, and transmit the signal of N41 to the fourth antenna only by using the fourth transceiver module. Therefore, the signal of N41 cannot be sent through the third antenna. In another possible implementation, in the path 3, if the terminal device transmits the signal of B3 to the switch 23, under control of the modem in the 4G system, the switch 23 turns on a path between the multiplexer 21 and the fourth antenna. In this case, the terminal device may transmit the signal of B3 to the fourth antenna through the interface 25, and transmit the signal of N41 to the third antenna only by using the fourth transceiver module. In other words, because transmission of the signal of B3 occupies one of the third antenna and the fourth antenna, the terminal device can alternately send the signal of N41 only through the other one of the third antenna and the fourth antenna. Therefore, the fifth antenna needs to be configured for the terminal device. In this way, the signal of N41 is alternately sent through four antennas.

In the foregoing solution, to alternately send the signal through four antennas, five antennas need to be configured for the terminal device, resulting in high development costs. In addition, because the switch 31 of the third transceiver module and the switch 41 of the fourth transceiver module are single-channel switches, only one path can be turned on, and a CA function is not supported. If a path for alternately sending the signal of N41 passes through the third transceiver module or the fourth transceiver module, a path for transmitting the signal of B3 or a signal of another frequency band by the third transceiver module or the fourth transceiver module is interrupted, which affects transmission of the signal of B3 or the signal of the another frequency band.

In conclusion, the structure of the radio frequency circuit shown in FIG. 1 has the following two problems.
(1) Alternate sending of a signal of an NR frequency band interrupts a hardware path of another frequency band. This affects signal transmission on other frequency bands and decreases a throughput.
(2) The additional fifth antenna increases hardware development costs.

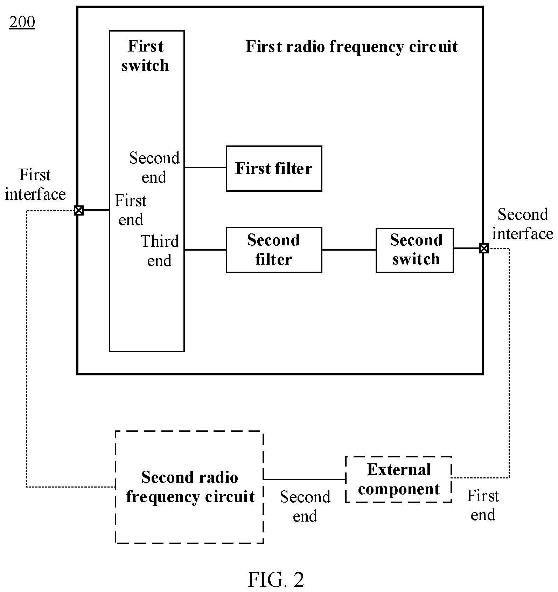

In view of this, this application provides a radio frequency circuit 200. As shown in FIG. 2, the radio frequency circuit 200 includes a first radio frequency circuit. The first radio frequency circuit includes a first interface, a first switch, a first filter, a second filter, a second switch, and a second interface.

The first interface is connected to a first end of the first switch, a second end of the first switch is connected to one end of the first filter, a third end of the first switch is connected to one end of the second filter, the other end of the second filter is connected to one end of the second switch, and the other end of the second switch is connected to the second interface. The first filter is configured to filter a signal of a first frequency band, the second filter is configured to filter a signal of a second frequency band, and the first switch is a multi-channel switch, and is configured to combine a filtered signal of the first frequency band with a filtered signal of the second frequency band, and send a combined signal to the first interface.

The first interface is configured to connect to a second radio frequency circuit, the second interface is configured to connect to a first end of an external component, and a second end of the external component is connected to the second radio frequency circuit. The second radio frequency circuit is configured to send, by using the external component, the signal of the second frequency band to the first radio frequency circuit to perform filtering, and the first radio frequency circuit is configured to send, to a target antenna by using the second radio frequency circuit, the signal that is of the second frequency band and that is processed by the second radio frequency circuit.

Optionally, the radio frequency circuit may include the second radio frequency circuit and the external component.

Optionally, the radio frequency circuit may be deployed in a terminal device.

For example, the terminal device may send the signal of the second frequency band by using the second radio frequency circuit, and then sequentially transmit the signal of the second frequency band to the second switch, the second filter, and the first switch by using the external component. The first switch can be turned on in a plurality of paths, combine the signal of the second frequency band with the signal of the first frequency band, send the combined signal to the first interface, and finally send the signal to the target antenna by using the second radio frequency circuit. The target antenna is an antenna connected to the second radio frequency circuit.

Therefore, in the foregoing radio frequency circuit, the signal of the second frequency band does not interrupt a path of the signal of the first frequency band. In a multi-band signal transmission scenario, in the radio frequency circuit in embodiments of this application, a signal of one frequency band does not interrupt a signal of another frequency band. This helps improve a throughput of the terminal device, to improve system performance.

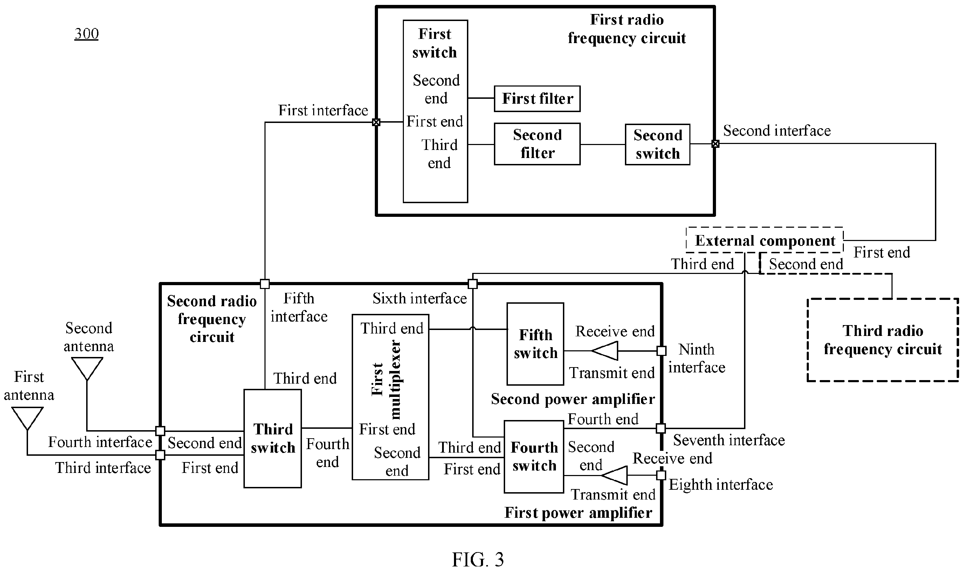

In an optional embodiment, this application provides a radio frequency circuit 300. As shown in FIG. 3, the radio frequency circuit 300 includes the foregoing second radio frequency circuit. The second radio frequency circuit includes a third interface, a fourth interface, a third switch, a fifth interface, a first multiplexer, a sixth interface, a fourth switch, a fifth switch, a first power amplifier, a second power amplifier, a seventh interface, an eighth interface, and a ninth interface.

A first end of the third switch is connected to the third interface, a second end of the third switch is connected to the fourth interface, a third end of the third switch is connected to the fifth interface, a fourth end of the third switch is connected to a first end of the first multiplexer, a second end of the first multiplexer is connected to a first end of the fourth switch, a third end of the first multiplexer is connected to one end of the fifth switch, a second end of the fourth switch is connected to a transmit end of the first power amplifier, a third end of the fourth switch is connected to the sixth interface, a fourth end of the fourth switch is connected to the seventh interface, the other end of the fifth switch is connected to a transmit end of the second power amplifier, a receive end of the first power amplifier is connected to the eighth interface, and a receive end of the second power amplifier is connected to the ninth interface.

The third interface is configured to connect to a first antenna, the fourth interface is configured to connect to a second antenna, the fifth interface is configured to connect to the first interface, the sixth interface is configured to connect to the second end of the external component, the seventh interface is configured to connect to a third end of the external component, and the second end of the external component is connected to a third radio frequency circuit.

The seventh interface is configured to send, to the first multiplexer by using the fourth switch, the signal that is of the second frequency band and that is processed by the third radio frequency circuit, the second power amplifier is configured to send a signal of a third frequency band to the first multiplexer by using the fifth switch, the first multiplexer includes two filters, the two filters are respectively configured to filter the signal of the second frequency band and the signal of the third frequency band, the first multiplexer is configured to combine the filtered signal of the second frequency band with the filtered signal of the third frequency band, and send a combined signal to the third switch, the third switch is configured to send the combined signal to the target antenna, and the target antenna is the first antenna or the second antenna.

Optionally, the radio frequency circuit may include the third radio frequency circuit and the external component.

Optionally, the radio frequency circuit may be deployed in a terminal device.

For example, the terminal device may send the signal of the second frequency band by using the third radio frequency circuit, and then sequentially transmit the signal of the second frequency band to the fourth switch and the first multiplexer by using the external component and the seventh interface. In addition, the terminal device may send the signal of the third frequency band by using the second power amplifier, and transmit the amplified signal to the first multiplexer by using the fifth switch. The first multiplexer combines the signal of the second frequency band with the signal of the third frequency band and transmits the combined signal to the target antenna by using the third switch. The target antenna is the first antenna or the second antenna.

Therefore, in the foregoing radio frequency circuit, the signal that is of the second frequency band and that is sent by the third radio frequency circuit may be transmitted to the target antenna by multiplexing a path of sending the signal of the third frequency band in the second radio frequency circuit. According to the radio frequency circuit provided in embodiments of this application, the signal may be alternately sent through a plurality of antennas without increasing costs.

In an optional embodiment, the radio frequency circuit 200 further includes the third radio frequency circuit. The third radio frequency circuit includes a tenth interface, an eleventh interface, a sixth switch, a twelfth interface, a second multiplexer, a thirteenth interface, a seventh switch, an eighth switch, a third power amplifier, a fourth power amplifier, a fourteenth interface, a fifteenth interface, and a sixteenth interface.

A first end of the sixth switch is connected to the tenth interface, a second end of the sixth switch is connected to the eleventh interface, a third end of the sixth switch is connected to the twelfth interface, a fourth end of the sixth switch is connected to a first end of the second multiplexer, a second end of the second multiplexer is connected to a first end of the seventh switch, a third end of the second multiplexer is connected to one end of the eighth switch, a second end of the seventh switch is connected to a transmit end of the third power amplifier, a third end of the seventh switch is connected to the thirteenth interface, a fourth end of the seventh switch is connected to the fourteenth interface, the other end of the eighth switch is connected to a transmit end of the fourth power amplifier, a receive end of the third power amplifier is connected to the fifteenth interface, and a receive end of the fourth power amplifier is connected to the sixteenth interface.

The tenth interface is configured to connect to a third antenna, the eleventh interface is configured to connect to a fourth antenna, the twelfth interface is configured to connect to a fourth radio frequency circuit, the thirteenth interface is configured to connect to the second end of the external component, the fourteenth interface is configured to connect to a fourth end of the external component, and a fifth end of the external component is connected to the fourth radio frequency circuit.

The fourteenth interface is configured to send, to the second multiplexer by using the seventh switch, the signal that is of the second frequency band and that is processed by the second radio frequency circuit, the fourth power amplifier is configured to send the signal of the third frequency band to the second multiplexer by using the eighth switch, the second multiplexer includes two filters, the two filters are respectively configured to filter the signal of the second frequency band and the signal of the third frequency band, the second multiplexer is configured to combine the filtered signal of the second frequency band with the filtered signal of the third frequency band, and send the combined signal to the sixth switch, the sixth switch is configured to send the combined signal to the target antenna, and the target antenna is the third antenna or the fourth antenna.

It should be understood that the terminal device may send the signal of the second frequency band by using the second radio frequency circuit, and then sequentially transmit the signal of the second frequency band to the seventh switch and the second multiplexer by using the external component and the fourteenth interface. In addition, the terminal device may send the signal of the third frequency band by using the fourth power amplifier, and transmit the amplified signal to the second multiplexer by using the eighth switch. The second multiplexer combines the signal of the second frequency band with the signal of the third frequency band and transmits the combined signal to the target antenna by using the sixth switch. The target antenna is the third antenna or the fourth antenna.

Therefore, in the foregoing radio frequency circuit, the signal that is of the second frequency band and that is sent by the second radio frequency circuit may be transmitted to the target antenna by multiplexing a path of sending the signal of the third frequency band in the third radio frequency circuit. According to the radio frequency circuit provided in this embodiment of this application, the signal may be alternately sent through a plurality of antennas without increasing costs.

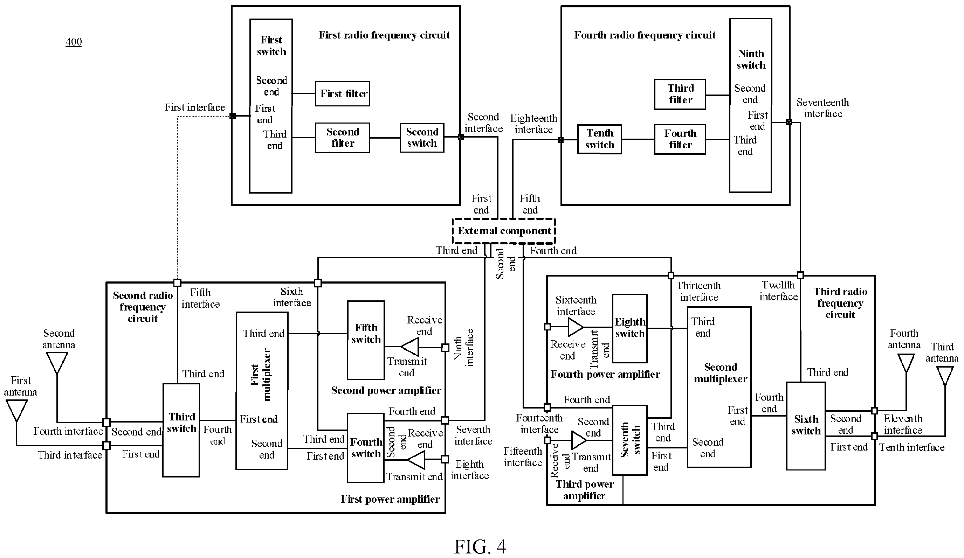

In an optional embodiment, the fourth radio frequency circuit includes a seventeenth interface, a ninth switch, a third filter, a fourth filter, a tenth switch, and an eighteenth interface, as shown in a radio frequency circuit 400 in FIG. 4.

A first end of the ninth switch is connected to the seventeenth interface, a second end of the ninth switch is connected to one end of the third filter, a third end of the ninth switch is connected to one end of the fourth filter, the other end of the fourth filter is connected to one end of the tenth switch, and the other end of the tenth switch is connected to the eighteenth interface.

The third filter is configured to filter the signal of the first frequency band, the fourth filter is configured to filter the signal of the second frequency band, and the ninth switch is a multi-channel switch, and is configured to combine the filtered signal of the first frequency band with the filtered signal of the second frequency band, and send the combined signal to the seventeenth interface. The seventeenth interface is configured to connect to the twelfth interface, and the eighteenth interface is configured to connect to the fifth end of the external component. The second radio frequency circuit or the third radio frequency circuit is configured to send the signal of the second frequency band to the fourth radio frequency circuit by using the external component to perform filtering, and the fourth radio frequency circuit is configured to send, to the target antenna, the signal that is of the second frequency band and that is processed by the second radio frequency circuit or the third radio frequency circuit.

It should be understood that the terminal device may send the signal of the second frequency band by using the second radio frequency circuit, and then sequentially transmit the signal of the second frequency band to the tenth switch, the fourth filter, and the ninth switch by using the external component. The ninth switch can be turned on in a plurality of paths, combine the signal of the second frequency band with the signal of the first frequency band, send the combined signal to the seventeenth interface, and finally send the signal to the target antenna by using the third radio frequency circuit. The target antenna is an antenna connected to the third radio frequency circuit, namely, the third antenna or the fourth antenna.

In an optional embodiment, the radio frequency circuit may include the fourth radio frequency circuit. In the foregoing radio frequency circuit, the signal of the second frequency band does not interrupt the path of the signal of the first frequency band. In addition, when sending the signal of the second frequency band, the second radio frequency circuit may multiplex a path of sending the signal of the third frequency band in the third radio frequency circuit. In a multi-band signal transmission scenario, in the radio frequency circuit in embodiments of this application, a signal of one frequency band does not interrupt a signal of another frequency band, and the signal may be alternately sent through a plurality of antennas. This improves a throughput of the terminal device and improves system performance.

In embodiments of this application, the radio frequency circuit may also be referred to as a transceiver module, a transceiver circuit, or another name. Further, the radio frequency circuit may be packaged in a module or a chip. This is not limited in embodiments of this application.

The following describes embodiments of this application in detail by using an example in which the signal of the first frequency band is an LTE signal and the signal of the second frequency band is an NR signal.

An embodiment of this application provides a new radio frequency circuit 500. A time division multiplexing switch is separately added to the third transceiver module and the fourth transceiver module in FIG. 1, so that a CA function of an NR frequency band and another frequency band can be implemented through alternate sending of a signal of the NR frequency band. This is applicable to an NR CA scenario.

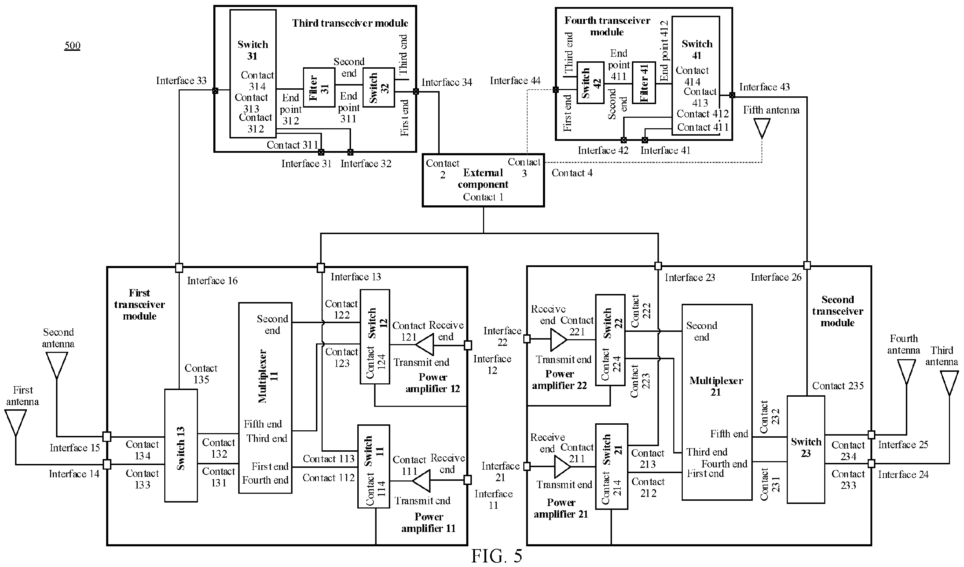

FIG. 5 is a schematic block diagram of a radio frequency circuit 500 of a terminal device. Components of the first transceiver module and the second transceiver module and their connection manners are the same as those in FIG. 1. Details are not described herein again.

The third transceiver module includes a switch 31, a filter 31, and a switch 32. A first end of the switch 32 is connected to a contact 2 of the external component through an interface 34. A second end of the switch 32 is connected to an end point 311 of the filter 31. An end point 312 of the filter 31 is connected to a contact 314 of the switch 31.

In the third transceiver module, the switch 31 is a multi-channel switch, and may simultaneously turn on a plurality of paths (which may be specifically implemented by using a multi-channel switch (multion) technology). The switch 32 is a time division multiplexing switch, and is configured to transmit different signals in different time periods.

The fourth transceiver module includes a switch 41, a filter 41, and a switch 42. A first end of the switch 42 is connected to a contact 3 of the external component through an interface 44. A second end of the switch 42 is connected to an end point 411 of the filter 41. An end point 412 of the filter 41 is connected to a contact 414 of the switch 41.

In the fourth transceiver module, the switch 41 is a multi-channel switch, and may simultaneously turn on a plurality of paths (which may be specifically implemented by using a multi-channel switch (multion) technology). The switch 42 is a time division multiplexing switch, and is configured to transmit different signals in different time periods.

In this embodiment, the external component includes a contact 1, the contact 2, the contact 3, and a contact 4. The external component is connected to a fifth antenna by using the contact 4.

1T4R is used as an example. In FIG. 5, the terminal device can send the signal of N41 through only one antenna at a time. A path 1 and a path 4 of the paths for sending the signal of N41 are the same as those in FIG. 1. Details are not described again. Because a path 2 and a path 3 respectively pass through the third transceiver module and the fourth transceiver module, the path 2 and the path 3 of N41 in FIG. 5 may be specifically as follows:
Path 2: power amplifier 11 -> switch 11 -> external component -> switch 32 -> filter 31 -> switch 31 -> switch 13 -> second antenna

The terminal device may amplify the signal of N41 by using the power amplifier 11, transmit the signal of N41 to the switch 11, transmit the signal of N41 to the external component through the interface 13, transmit the signal of N41 to the switch 32 through the interface 34, transmit the signal of N41 to the filter 31, transmit the signal of N41 to the switch 31, transmit the signal of N41 to the switch 13 through the interface 33 and the interface 16, and finally transmit the signal of N41 to the second antenna through the interface 15.
Path 3: power amplifier 11 -> switch 11 -> external component -> switch 42 -> filter 41 -> switch 41 -> switch 23 -> third antenna or fourth antenna

The terminal device may amplify the signal of N41 by using the power amplifier 11, transmit the signal of N41 to the switch 11, transmit the signal of N41 to the external component through the interface 13, transmit the signal of N41 to the switch 42 through the interface 44, transmit the signal of N41 to the filter 41, transmit the signal of N41 to the switch 41, transmit the signal of N41 to the switch 23 through the interface 43 and the interface 26, and finally transmit the signal of N41 to the third antenna through the interface 24 or to the fourth antenna through the interface 25.

In this embodiment of this application, when a path for alternately sending the signal of N41 passes through the third transceiver module, the switch 32 may turn on a path for receiving or sending the signal of N41 in a time division manner, and the switch 31 may simultaneously turn on a path between the switch 31 and the switch 32 and a transmission path of another frequency band. That is, the switch 31 may simultaneously turn on a plurality of paths. When the path for alternately sending the signal of N41 passes through the fourth transceiver module, the case is similar. Therefore, in FIG. 5, alternate sending of the signal of N41 does not interrupt a path of the signal of B3 or a signal of another frequency band that is transmitted in the third transceiver module or the fourth transceiver module. This implements NR CA.

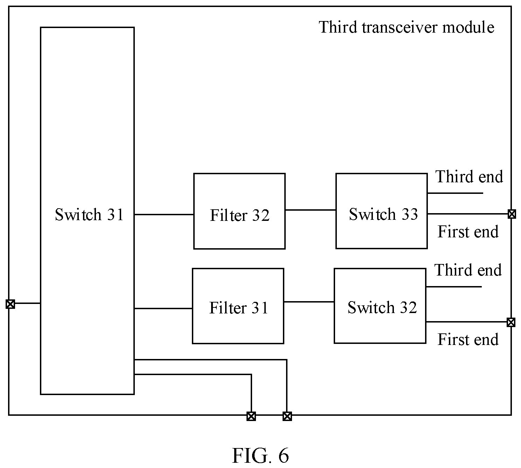

FIG. 5 shows a structure of a radio frequency circuit in which a time division multiplexing switch is separately added to the third transceiver module and the fourth transceiver module. In another possible implementation, a plurality of time division multiplexing switches may be separately added to the third transceiver module and the fourth transceiver module, and one time division multiplexing switch multiplexes one filter. As shown in FIG. 6, the third transceiver module is used as an example. The filter 31 and the filter 32 separately correspond to different frequency bands. The first end of the switch 32 is a transmit end, and a third end of the switch 32 is a receive end. The switch 33 is structured in a similar way. In this way, independent transmission of two frequency bands can be implemented, and a path of a signal of another frequency band transmitted in the third transceiver module is not interrupted. The fourth transceiver module is the same as the third transceiver module. Details are not described again. It should be understood that the third transceiver module and/or the fourth transceiver module may further include more filters and switches. A quantity of filters and switches is not limited in this embodiment of this application.

To resolve the foregoing problem (2), an embodiment of this application provides another radio frequency circuit 700. An AUX interface is separately added to the first transceiver module and the second transceiver module, so that a signal of an NR frequency band may be alternately sent through the first antenna, the second antenna, the third antenna, and the fourth antenna, and there is no need to deploy five antennas. This reduces hardware development costs.

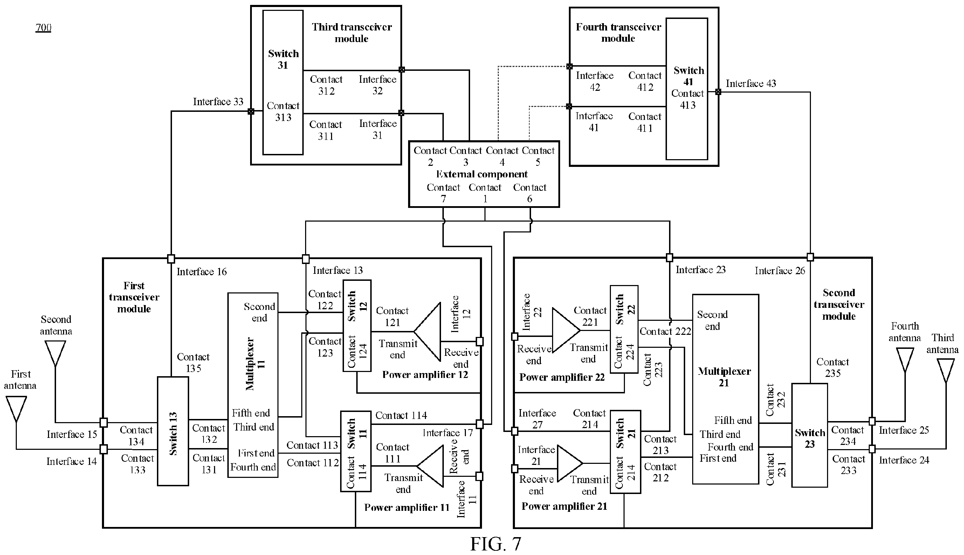

FIG. 7 is a schematic block diagram of another radio frequency circuit 700 of a terminal device. Components of the third transceiver module and the fourth transceiver module and their connection manners are the same as those in FIG. 1. Details are not described herein again.

In addition to the component shown in FIG. 1, the first transceiver module includes an interface 17. The interface 17 is an AUX interface, and the interface 17 is connected to the contact 114 of the switch 11.

In addition to the component shown in FIG. 1, the second transceiver module includes an interface 27. The interface 27 is an AUX interface, and the interface 27 is connected to the contact 214 of the switch 21.

The external component includes the contact 1, the contact 2, the contact 3, the contact 4, the contact 5, the contact 6, and a contact 7. The contact 6 is connected to the interface 27, and the contact 7 is connected to the interface 17.

1T4R is used as an example. In FIG. 7, the terminal device can send the signal of N41 through only one antenna at a time. The path 1, the path 2, and the path 3 in paths of sending the signal of N41 are the same as those in FIG. 1. Details are not described again. It is assumed that in path 3, the signal of N41 is transmitted to the third antenna, that is, the transmission path of the signal of B3 may be: power amplifier 22 - > switch 22 - > multiplexer 21 - > switch 23 - > fourth antenna, and then path 4 of the signal of N41 in this embodiment may be as follows:
Path 4: power amplifier 11 -> switch 11 -> external component -> switch 21 -> multiplexer 21 -> switch 23 -> fourth antenna

Specifically, the terminal device may amplify the signal of N41 by using the power amplifier 11, transmit the signal of N41 to the switch 11, transmit the signal of N41 to the external component through the interface 13, transmit the signal of N41 to the switch 21 through the interface 27, transmit the signal of N41 to the multiplexer 21, transmit the signal of N41 to the switch 23, and finally transmit the signal of N41 to the fourth antenna through the interface 25.

In this embodiment of this application, the interface 27 is added to the second transceiver module, so that the fifth antenna in FIG. 1 is omitted. In the path 4, because the signal of N41 is transmitted to the interface 27 through the interface 11, the signal of N41 and the signal of B3 may be combined at the multiplexer 21, and then the signal of N41 and the signal of B3 are combined into one signal by using the multion technology. In this way, the signal of N41 can multiplex the path of sending the signal of B3 in the second transceiver module, to turn on the path 4. Therefore, in FIG. 7, the terminal device may alternately send, in a four-antenna radio frequency circuit structure, the signal of N41 through four antennas, and simultaneously transmit the signal of B3. This is applicable to an NR DC scenario.

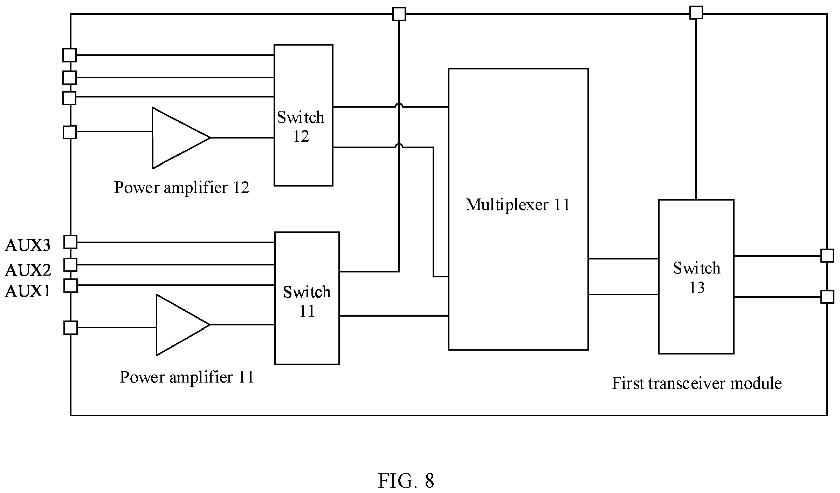

FIG. 7 shows a structure of a radio frequency circuit in which one AUX interface is separately added to the first transceiver module and the second transceiver module. However, it should be understood that a plurality of AUX interfaces may also be added to the first transceiver module and/or the second transceiver module to transmit signals of different frequency bands. For example, one AUX interface may be added to the first transceiver module, and a plurality of AUX interfaces may be added to the second transceiver module. Alternatively, a plurality of AUX interfaces may be added to the first transceiver module, and one AUX interface may be added to the second transceiver module. Alternatively, a plurality of AUX interfaces may be added to the first transceiver module, and a plurality of AUX interfaces may be added to the second transceiver module. This is not limited in this embodiment of this application. In the first transceiver module, the AUX interface may be connected to the switch 11 or the switch 12. In the second transceiver module, the AUX interface may be connected to the switch 21 or the switch 22. The first transceiver module is used as an example. FIG. 8 shows a location and a connection manner of an AUX interface. The second transceiver module is similar to the first transceiver module. In addition, in this embodiment of this application a quantity of AUX interfaces is not limited to that shown in the figure. The first transceiver module may further include a greater quantity of AUX interfaces.

To resolve the foregoing problems (1) and (2), an embodiment of this application provides another new radio frequency circuit 900. A time division multiplexing switch is separately added to the third transceiver module and the fourth transceiver module, and an AUX interface is separately added to the first transceiver module and the second transceiver module, so that a CA function of an NR frequency band and another frequency band can be implemented through alternate sending of a signal of an NR frequency band. In addition, the signal of the NR frequency band may be alternately sent through the first antenna, the second antenna, the third antenna, and the fourth antenna, and there is no need to deploy five antennas. This reduces hardware development costs.

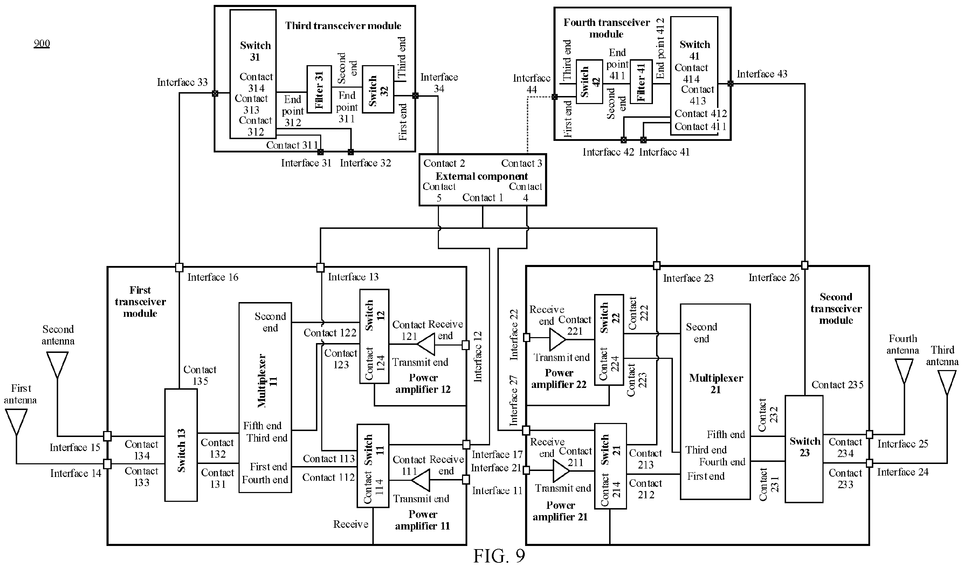

FIG. 9 is a schematic block diagram of another radio frequency circuit 900 of a terminal device. Components of the third transceiver module and the fourth transceiver module and their connection manner are the same as those in FIG. 5, and components of the first transceiver module and the second transceiver module and their connection manner are the same as those in FIG. 7. Details are not described herein again.

The external component includes the contact 1, the contact 2, the contact 3, the contact 4, and the contact 5. The contact 4 is connected to the switch 21 through the interface 27. The contact 5 is connected to the switch 11 through the interface 17.

1T4R is used as an example. In FIG. 9, a specific path for sending the signal of N41 is as follows:
Path 1: power amplifier 11 -> switch 11 -> multiplexer 11 -> switch 13 -> first antenna

The terminal device may amplify the signal of N41 by using the power amplifier 11, then sequentially transmit the signal of N41 to the switch 11, the multiplexer 11, and the switch 13, and finally transmit the signal of N41 to the first antenna through the interface 14.
Path 2: power amplifier 11 -> switch 11 -> external component -> switch 32 -> filter 31 -> switch 31 -> switch 13 -> second antenna

The terminal device may amplify the signal of N41 by using the power amplifier 11, transmit the signal of N41 to the switch 11, transmit the signal of N41 to the external component through the interface 13, transmit the signal of N41 to the switch 32 through the interface 34, transmit the signal of N41 to the filter 31, transmit the signal of N41 to the switch 31, transmit the signal of N41 to the switch 13 through the interface 33 and the interface 16, and finally transmit the signal of N41 to the second antenna through the interface 15.
Path 3: power amplifier 11 -> switch 11 -> external component -> switch 42 -> filter 41 -> switch 41 -> switch 23 -> third antenna

The terminal device may amplify the signal of N41 by using the power amplifier 11, transmit the signal of N41 to the switch 11, transmit the signal of N41 to the external component through the interface 13, transmit the signal of N41 to the switch 42 through the interface 44, transmit the signal of N41 to the filter 41, transmit the signal of N41 to the switch 41, transmit the signal of N41 to the switch 23 through the interface 43 and the interface 26, and finally transmit the signal of N41 to the third antenna through the interface 24.
Path 4: power amplifier 11 -> switch 11 -> external component -> switch 21 -> multiplexer 21 -> switch 23 -> fourth antenna

The terminal device may amplify the signal of N41 by using the power amplifier 11, transmit the signal of N41 to the switch 11, transmit the signal of N41 to the external component through the interface 13, transmit the signal of N41 to the switch 21 through the interface 27, transmit the signal of N41 to the multiplexer 21, transmit the signal of N41 to the switch 23, and finally transmit the signal of N41 to the fourth antenna through the interface 25.

In this embodiment of this application, when a path for alternately sending the signal of N41 passes through the third transceiver module, the switch 32 may turn on a path for receiving or sending the signal of N41 in a time division manner, and the switch 31 may simultaneously turn on a path between the switch 31 and the switch 32 and a transmission path of another frequency band. That is, the switch 31 may simultaneously turn on a plurality of paths. When the path for alternately sending the signal of N41 passes through the fourth transceiver module, the case is similar. Therefore, in FIG. 9, alternate sending of the signal of N41 does not interrupt a path of the signal of B3 or a signal of another frequency band that is transmitted in the third transceiver module or the fourth transceiver module. This implements NR CA. In addition, in this embodiment of this application, the interface 27 is added to the second transceiver module, so that the fifth antenna in FIG. 1 is omitted. That is, the path of sending the signal of B3 is: power amplifier 22 -> switch 22 -> multiplexer 21 -> switch 23 -> fourth antenna. In the path 4, because the signal of N41 is transmitted to the interface 27 through the interface 11, the signal of N41 and the signal of B3 may be combined at the multiplexer 21, and then the signal of N41 and the signal of B3 are combined into one signal by using the multion technology. In this way, the signal of N41 can multiplex the path of sending the signal of B3 in the second transceiver module, to turn on the path 4. Therefore, in FIG. 9, the terminal device may alternately send, in a four-antenna radio frequency circuit structure, the signal of N41 through four antennas, and simultaneously transmit the signal of B3. This is applicable to an NR DC scenario.

FIG. 9 shows a structure of a radio frequency circuit in which a time division multiplexing switch is separately added to the third transceiver module and the fourth transceiver module, and an AUX interface is separately added to the first transceiver module and the second transceiver module. In another possible implementation, a plurality of time division multiplexing switches may be separately added to the third transceiver module and the fourth transceiver module, and one time division multiplexing switch multiplexes one filter. A plurality of AUX interfaces are separately added to the first transceiver module and the second transceiver module, and are configured to transmit signals of different frequency bands. Details are not described herein.

In the foregoing embodiments of this application, an example in which a transmit end of the signal of N41 is the power amplifier 11 in the first transceiver module is used for description. However, it should be understood that the transmit end of the signal of N41 may alternatively be the power amplifier 21 in the second transceiver module. The radio frequency circuit 900 shown in FIG. 9 is used as an example. If the power amplifier 21 in the second transceiver module is used as the transmit end of the signal of N41, and 1T4R is used, in FIG. 9, specific paths for sending the signal of N41 are as follows:
Path 1: power amplifier 21 -> switch 21 -> multiplexer 21 -> switch 23 -> third antenna
Path 2: power amplifier 21 -> switch 21 -> external component -> switch 42 -> filter 41 -> switch 41 -> switch 23 -> fourth antenna
Path 3: power amplifier 21 -> switch 21 -> external component -> switch 32 -> filter 31 -> switch 31 -> switch 13 -> first antenna
Path 4: power amplifier 21 -> switch 21 -> external component -> switch 11 -> multiplexer 11 -> switch 13 -> second antenna

For detailed explanation of the foregoing paths, refer to the descriptions in the foregoing embodiment. Details are not described herein again.

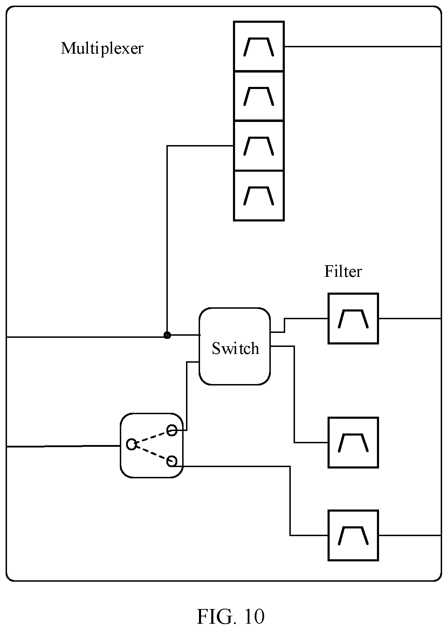

In addition, for ease of understanding, internal structures of the multiplexer 11 and the multiplexer 21 in this embodiment of this application may be shown in FIG. 10. However, it should be understood that this structure is merely an example.

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the modules is merely logical function division and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, that is, may be located in one location, or may be distributed on a plurality of network modules. Some or all the modules may be selected according to actual needs to achieve the objectives of the solutions of embodiments.

In addition, functional modules in this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio frequency circuit for transmitting a multi-band signal, comprising:
a first radio frequency circuit, comprising a first interface, a first switch, a first filter, a second filter, a second switch, and a second interface, wherein
the first interface is connected to a first end of the first switch, a second end of the first switch is connected to one end of the first filter, a third end of the first switch is connected to one end of the second filter, the other end of the second filter is connected to one end of the second switch, and the other end of the second switch is connected to the second interface;
the first filter is configured to filter a signal of a first frequency band, the second filter is configured to filter a signal of a second frequency band, and the first switch is a multi-channel switch, and is configured to combine a filtered signal of the first frequency band with a filtered signal of the second frequency band, and send a combined signal to the first interface;
the first interface is configured to connect to a second radio frequency circuit, the second interface is configured to connect to a first end of an external component, and a second end of the external component is connected to the second radio frequency circuit; and
the second radio frequency circuit is configured to send, by using the external component, the signal of the second frequency band to the first radio frequency circuit to perform filtering, and the first radio frequency circuit is configured to send, to a target antenna by using the second radio frequency circuit, the signal that is of the second frequency band and that is processed by the second radio frequency circuit.

2. The radio frequency circuit according to claim 1, wherein the second radio frequency circuit comprises:
a third interface, a fourth interface, a third switch, a fifth interface, a first multiplexer, a sixth interface, a fourth switch, a fifth switch, a first power amplifier, a second power amplifier, a seventh interface, an eighth interface, and a ninth interface, wherein
a first end of the third switch is connected to the third interface, a second end of the third switch is connected to the fourth interface, a third end of the third switch is connected to the fifth interface, a fourth end of the third switch is connected to a first end of the first multiplexer, a second end of the first multiplexer is connected to a first end of the fourth switch, a third end of the first multiplexer is connected to one end of the fifth switch, a second end of the fourth switch is connected to a transmit end of the first power amplifier, a third end of the fourth switch is connected to the sixth interface, a fourth end of the fourth switch is connected to the seventh interface, the other end of the fifth switch is connected to a transmit end of the second power amplifier, a receive end of the first power amplifier is connected to the eighth interface, and a receive end of the second power amplifier is connected to the ninth interface;
the third interface is configured to connect to a first antenna, the fourth interface is configured to connect to a second antenna, the fifth interface is configured to connect to the first interface, the sixth interface is configured to connect to the second end of the external component, the seventh interface is configured to connect to a third end of the external component, and the second end of the external component is connected to a third radio frequency circuit; and
the seventh interface is configured to send, to the first multiplexer by using the fourth switch, the signal that is of the second frequency band and that is processed by the third radio frequency circuit, the second power amplifier is configured to send a signal of a third frequency band to the first multiplexer by using the fifth switch, the first multiplexer comprises two filters, the two filters are respectively configured to filter the signal of the second frequency band and the signal of the third frequency band, the first multiplexer is configured to combine the filtered signal of the second frequency band with the filtered signal of the third frequency band, and send a combined signal to the third switch, the third switch is configured to send the combined signal to the target antenna, and the target antenna is the first antenna or the second antenna.

3. The radio frequency circuit according to claim 1 or 2, wherein the radio frequency circuit comprises the second radio frequency circuit.

4. The radio frequency circuit according to claims 1 to 3, wherein the radio frequency circuit further comprises:
the third radio frequency circuit, comprising a tenth interface, an eleventh interface, a sixth switch, a twelfth interface, a second multiplexer, a thirteenth interface, a seventh switch, an eighth switch, a third power amplifier, a fourth power amplifier, a fourteenth interface, a fifteenth interface, and a sixteenth interface, wherein
a first end of the sixth switch is connected to the tenth interface, a second end of the sixth switch is connected to the eleventh interface, a third end of the sixth switch is connected to the twelfth interface, a fourth end of the sixth switch is connected to a first end of the second multiplexer, a second end of the second multiplexer is connected to a first end of the seventh switch, a third end of the second multiplexer is connected to one end of the eighth switch, a second end of the seventh switch is connected to a transmit end of the third power amplifier, a third end of the seventh switch is connected to the thirteenth interface, a fourth end of the seventh switch is connected to the fourteenth interface, the other end of the eighth switch is connected to a transmit end of the fourth power amplifier, a receive end of the third power amplifier is connected to the fifteenth interface, and a receive end of the fourth power amplifier is connected to the sixteenth interface;
the tenth interface is configured to connect to a third antenna, the eleventh interface is configured to connect to a fourth antenna, the twelfth interface is configured to connect to a fourth radio frequency circuit, the thirteenth interface is configured to connect to the second end of the external component, the fourteenth interface is configured to connect to a fourth end of the external component, and a fifth end of the external component is connected to the fourth radio frequency circuit; and
the fourteenth interface is configured to send, to the second multiplexer by using the seventh switch, the signal that is of the second frequency band and that is processed by the second radio frequency circuit, the fourth power amplifier is configured to send the signal of the third frequency band to the second multiplexer by using the eighth switch, the second multiplexer comprises two filters, the two filters are respectively configured to filter the signal of the second frequency band and the signal of the third frequency band, the second multiplexer is configured to combine the filtered signal of the second frequency band with the filtered signal of the third frequency band, and send the combined signal to the sixth switch, the sixth switch is configured to send the combined signal to the target antenna, and the target antenna is the third antenna or the fourth antenna.

5. The radio frequency circuit according to claim 4, wherein the fourth radio frequency circuit comprises:
a seventeenth interface, a ninth switch, a third filter, a fourth filter, a tenth switch, and an eighteenth interface, wherein
a first end of the ninth switch is connected to the seventeenth interface, a second end of the ninth switch is connected to one end of the third filter, a third end of the ninth switch is connected to one end of the fourth filter, the other end of the fourth filter is connected to one end of the tenth switch, and the other end of the tenth switch is connected to the eighteenth interface;
the third filter is configured to filter the signal of the first frequency band, the fourth filter is configured to filter the signal of the second frequency band, and the ninth switch is a multi-channel switch, and is configured to combine the filtered signal of the first frequency band with the filtered signal of the second frequency band, and send the combined signal to the seventeenth interface;
the seventeenth interface is configured to connect to the twelfth interface, and the eighteenth interface is configured to connect to the fifth end of the external component; and
the second radio frequency circuit or the third radio frequency circuit is configured to send the signal of the second frequency band to the fourth radio frequency circuit by using the external component to perform filtering, and the fourth radio frequency circuit is configured to send, to the target antenna, the signal that is of the second frequency band and that is processed by the second radio frequency circuit or the third radio frequency circuit.

6. The radio frequency circuit according to claim 4 or 5, wherein the radio frequency circuit comprises the fourth radio frequency circuit.

7. The radio frequency circuit according to any one of claims 1 to 6, wherein the radio frequency circuit comprises the external component.

8. A terminal device, comprising the radio frequency circuit according to any one of claims 1 to 7.
